# EUROPÄISCHE PATENTANMELDUNG

(11) **EP 1 329 362 A1**
(43) Veröffentlichungstag der Anmeldung: **23.07.2003**
(21) Anmeldenummer: 03008997.3
(22) Anmeldetag: 21.11.2000
(51) Int. Cl.: B60R 13/02

(54) **Himmel für ein Fahrzeugdach**

(30) Priorität: 09.12.1999 DE 19959543
(62) Teilanmeldung aus: 00125452.3
(71) Anmelder: Webasto Vehicle Systems International GmbH, 82131 Stockdorf (DE)
(72) Erfinder: Lante, Christoph Tobias, 29399 Wahrenholz (DE); Kralik, Martin, 82362 Weilheim (DE); Kurpjuweit, Mauricio, 80634 München (DE)
(74) Vertreter: Konnerth, Dieter Hans

(57) **Zusammenfassung**

Die Erfindung betrifft einen Himmel 1 für ein Fahrzeugdach mit einer im wesentlichen starren Grundstruktur 2, einer zum Fahrzeuginnenraum weisenden zumindest teilflexiblen Decklage 6 und wenigstens einer Sollknicklinie 13, 14, an der ein Himmelabschnitt 11 zur Montage am Fahrzeugdach nach unten zur Decklage 6 hin umbiegbar oder abknickbar ist, wobei die Grundstruktur 2 im Bereich der Sollknicklinie 13, 14 eine Dehneinrichtung 22, 23 enthält, die die Decklage 6 in der zurückgeklappten Einbaulage des Himmels 1 gespannt oder gedehnt hält.

## Beschreibung

Die Erfindung betrifft einen Himmel für ein Fahrzeugdach mit einer im wesentlichen starren Grundstruktur, einer zum Fahrzeuginnenraum weisenden zumindest teilflexiblen Decklage und wenigstens einer Sollknicklinie, an der ein Himmelabschnitt zur Montage am Fahrzeugdach nach unten zur Decklage hin umbiegbar oder abknickbar ist.

Aus der DE 197 09 016 C2 ist ein Fahrzeugdach bekannt geworden, das sandwichartig aufgebaut und an seiner Innenschale als Dachhimmel ausgebildet ist, der an die flache Form des Fahrzeugdaches angepaßt ist. Das Fahrzeugdach ist getrennt von der Fahrzeugkarosserie hergestellt, mit seinen Außenrändern auf einen Karosserierahmen auflegbar und mit diesem fest verbindbar. Der Dachhimmel ist für den Durchtritt durch die von dem Karosserierahmen begrenzte Karosseriedachöffnung während der Montage unter partieller Faltung in den Eckbereichen nach unten umbiegbar. Sollknickstellen können am Himmel vorgesehen sein, die das vorübergehende Umbiegen von Himmelrandbereichen nach unten und die Faltung an den vier Ecken des Fahrzeugdaches erleichtern. Dazu können kerbähnliche Vertiefungen an den Umbiegungs- oder Knickstellen auf der der Himmelfläche abgelegenen Seite vorgesehen sein, die entsprechend den Darstellungen jeweils entlang einer nahezu wölbungsfreien Ebene am Fahrzeugdach verlaufen.

Der Erfindung liegt die Aufgabe zugrunde, einen eingangs genannten Himmel zu schaffen, dessen Sollknicklinien nach der Montage des Himmels optisch unauffällig sind.

Diese Aufgabe wird bei dem oben genannten Himmel erfindungsgemäß dadurch gelöst, daß die Grundstruktur im Bereich der Sollknicklinie eine Dehneinrichtung enthält, die die Decklage in der zurückgeklappten Einbaulage des Himmels gespannt oder gedehnt hält. Durch die Dehneinrichtung wird an der Sollknicklinie in jedem Fall eine Straffung der Decklage, z. B. einer Stoffbespannung oder einer Schaumgummischicht, erzielt, so daß der Ort der erfolgten Umbiegung beim eingebauten Himmel nicht mehr erkennbar ist.

Die Dehneinrichtung läßt sich auch an einer der Teilknicklinien einsetzen, z. B. wenn diese als ein Schlitz oder Einschnitt in der Grundstruktur gebildet ist.

Vorteilhafte Ausgestaltungen der Erfindung sind in den Unteransprüchen angegeben.

Nachfolgend werden Ausführungsbeispiele der Erfindung unter Bezugnahme auf Zeichnungen näher erläutert. Es zeigt:
- Fig. 1: in einer perspektivischen Ansicht in schematischer Darstellung einen Himmel für ein Fahrzeugdach;
- Fig. 2: in einer Querschnittsansicht entlang der Schnittlinie A - A in Fig. 1 den Himmel mit einer Sollknicklinie;
- Fig. 3: in einer Querschnittsansicht entlang der Schnittlinie B - B in Fig. 1 den Himmel mit einer zweifachen Sollknicklinie;
- Fig. 4: in einer Querschnittsansicht entlang der Schnittlinie B - B in Fig. 1 den Himmel mit einem umgebogenen Randbereich;
- Fig. 5: in einer Querschnittsansicht entlang der Schnittlinie B - B in Fig. 1 ein Beispiel der Gestaltung der Sollknicklinien;
- Fig. 6: in einer Querschnittsansicht entlang der Schnittlinie B - B in Fig. 1 ein weiteres Beispiel der Gestaltung der Sollknicklinien;
- Fig. 7: in einer Querschnittsansicht entlang der Schnittlinie B - B in Fig. 1 ein weiteres Beispiel der Gestaltung der Sollknicklinien;
- Fig. 8: in einer Querschnittsansicht entlang der Schnittlinie B - B in Fig. 1 den Himmel mit nicht herabgeklapptem Randabschnitt;
- Fig. 9: in einer Querschnittsansicht gemäß Fig. 8 den Himmel mit herabgeklapptem Randabschnitt;
- Fig. 10: in einer Querschnittsansicht einen Himmel mit einer Sollknicklinie und abgebogenem Randbereich;
- Fig. 11: in einer Querschnittsansicht den Himmel mit zurückgeklapptem Randbereich in Einbaulage; und
- Fig. 12: in einer perspektivischen Ansicht einen Himmel mit einer Dehneinrichtung an einer Sollknickstelle.

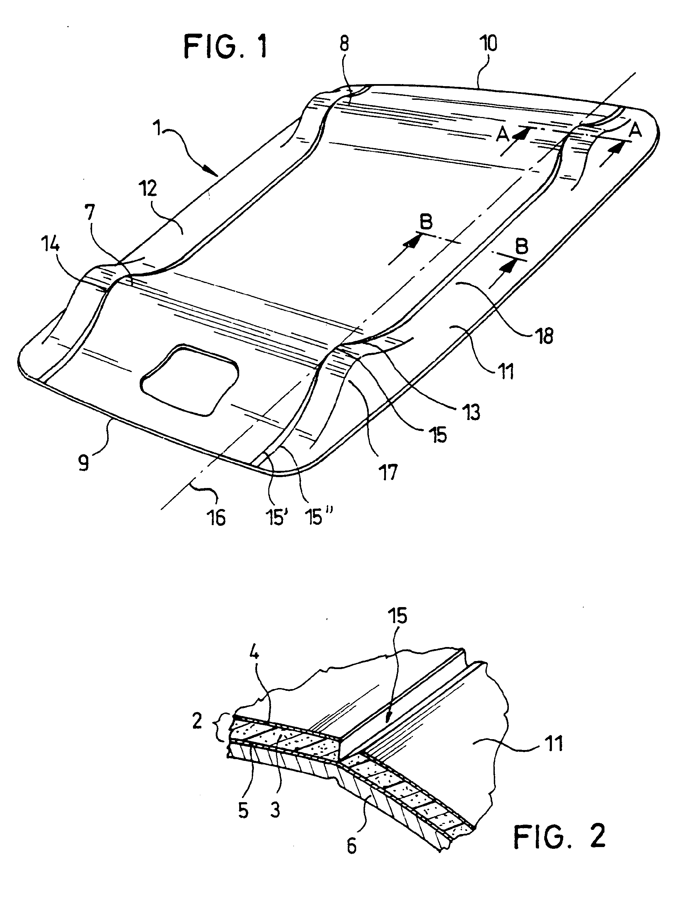

Ein Himmel 1 für ein Fahrzeug, insbesondere für ein Kraftfahrzeug wie z. B. einen PKW, weist eine oberseitige Grundstruktur 2 auf (siehe Fig. 2), die in der Einbaulage des Himmels 1 dem Fahrzeugdach oder der Dachfläche eines Dachmoduls zugewandt ist. Die Grundstruktur 2 besteht aus einer Schaumstoffschicht 3 und einer oberen und einer unteren Glasfasermatte oder Glasfaserschicht 4 bzw. 5, die beidseits auf der verfestigten Schaumstoffschicht 3 angebracht sind und einen sandwichartigen Aufbau bilden, der eine harte, starre und im wesentlichen nicht biegbare Grundstruktur 2 bereitstellt. Der Himmel 1 weist an seiner Unterseite, die dem Fahrzeuginnenraum zugewandt ist, eine Decklage 6 auf, die z. B. ein Stoff oder ein Stoff mit einer Schaumstoffunterlage ist und mit der Grundstruktur 2 verklebt ist. Diese Decklage 6 ist zumindest teilweise flexibel.

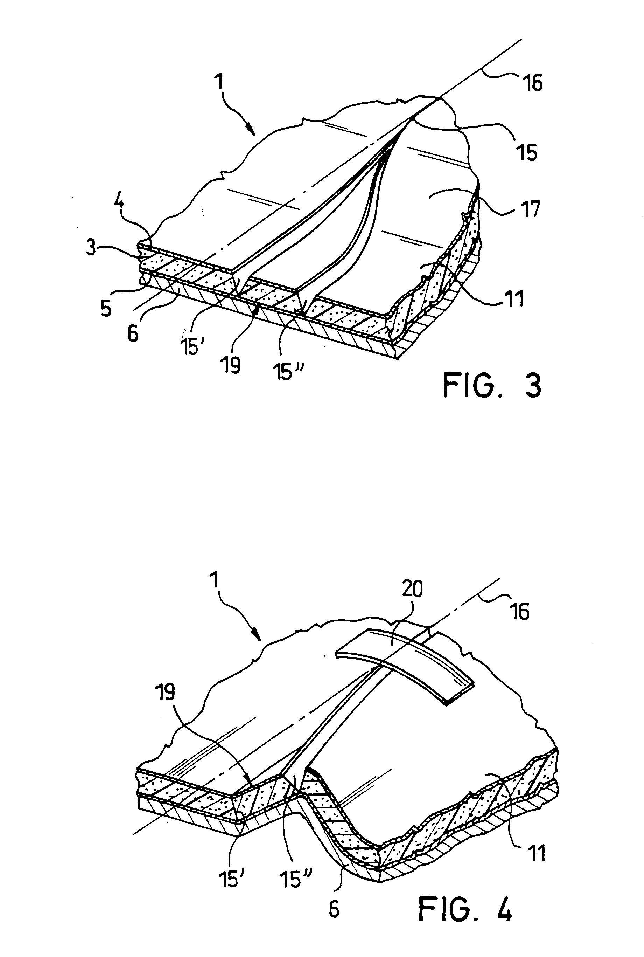

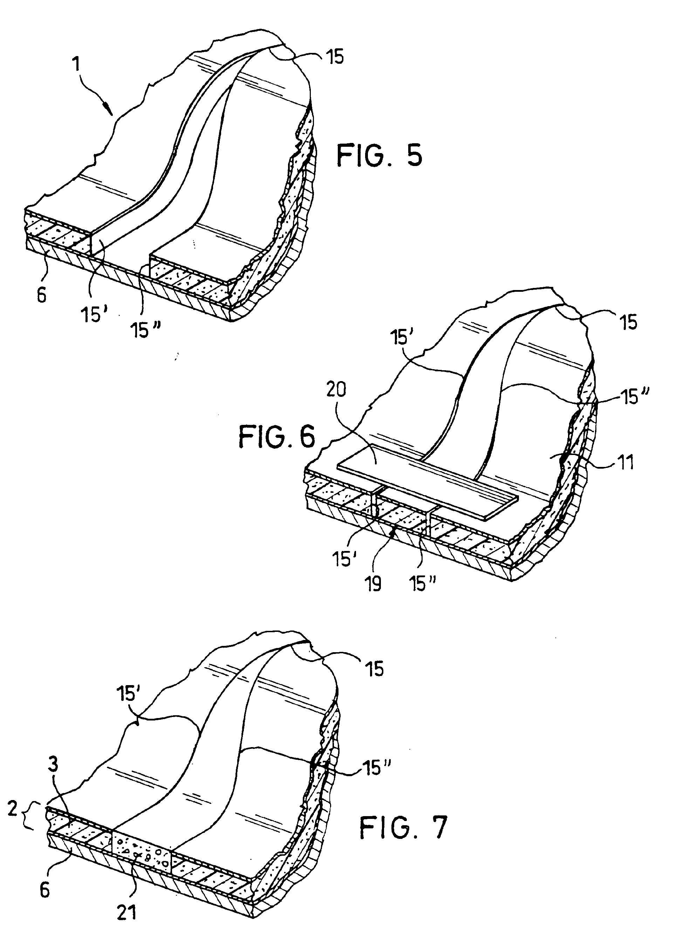

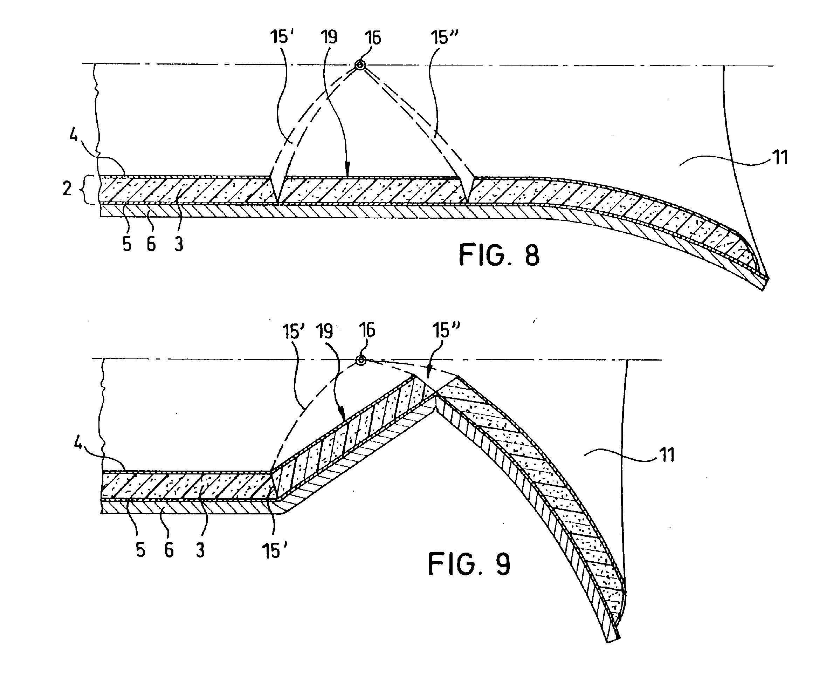

Der Himmel 1 ist als Verkleidung des Fahrzeugdaches an dessen Innenkontur angepaßt und weist zwei erhabene Bereiche 7, 8 auf (siehe die Draufsicht der Fig. 1), die im Ausführungsbeispiel nahe dem Vorderende 9 und dem Hinterende 10 quer über den Himmel 1 und bis nahezu an den seitlichen Himmelrand verlaufen. Der vordere erhabene Bereich 7 dient z. B. der versenkten Aufnahme von zwei Sonnenblenden, während der hintere erhabene Bereich 8 z. B. den freien Kopfraum für die hinteren Fahrzeuginsassen vergrößert. Die beiden seitlichen Randabschnitte oder Randbereiche 11 und 12 des Himmels 1 decken im Einbauzustand die Seitenholme des Dachrahmens des Fahrzeugdaches ab (nicht dargestellt). Damit der Himmel 1 z. B. als Teil eines vorgefertigten Dachmoduls entsprechend der DE 197 09 016 C2 bei der Montage von oben in das Fahrzeugdach eingesetzt werden kann, sind die beiden Randbereiche 11, 12 des Himmels 1 nach unten umbiegbar oder abklappbar, so daß der Himmel 1 durch die vom Dachrahmen freigegebene Öffnung, die kleiner ist wie der Himmel 1, eingesetzt werden kann. Zu diesem Zweck enthält der Himmel 1 zwei längs verlaufende Sollknickstellen oder -linien 13 und 14, an denen der jeweilige Randbereich 11 bzw. 12 nach unten abklappbar ist. Die Sollknicklinie 13, 14 ist z. B. als ein Einschnitt 15 in der Grundstruktur 2 gebildet, der die obere Glasfaserschicht 4 und die Schaumstoffschicht 3 durchtrennt, nicht jedoch die untere Glasfaserschicht 5. Dieser Einschnitt 15 ist in dem erhabenen Bereich 7 bzw. 8 des Himmels 1 ausgebildet und fällt dort im wesentlichen mit einer theoretischen Biegelinie 16 zusammen, die sich als Längstangente an die höchsten Stellen der erhabenen Bereiche 7, 8 anlegt. In den sich an den erhabenen Bereich 7, 8 anschließenden gewölbten Abschnitten 17 zum Vorderende 9 bzw. zum Hinterende 10 des Himmels 1 hin oder zu einem abgesenkten Zwischenbereich 18 zwischen den beiden erhabenen Bereichen 7 und 8 hin ist der Einschnitt 15 erweitert (siehe Fig. 5) oder er spaltet sich in zwei separate Einschnitte 15', 15" auf (siehe Fig. 3). Beim Herabbiegen des Randabschnitts 11 des Himmels 1 öffnet sich im erhabenen Bereich 7, 8 der Einschnitt 15 (siehe Fig. 2). In den von der theoretischen Biegelinie 16 vertikal beabstandeten Abschnitten der Sollknicklinie 13, 14 verschwenkt sich das zwischen den beiden Einschnitten 15', 15" gelegene Zwischenstück 19 derart (siehe Fig. 4), daß sich der eine Einschnitt 15" an die theoretische Biegelinie 16 annähert und dabei öffnet, während sich der andere Einschnitt 15' schließt (siehe auch Fig. 8 und 9). Die Einschnitte 15, 15' und 15" können als gerade, schmale oder breite Schnitte oder Stanzungen gebildet sein oder sie weisen eine z. B. U- oder V-förmige Kerbform auf.

Der Abstand zwischen den beiden separaten Einschnitten 15' und 15" nimmt mit der Größe des vertikalen Abstandes der Einschnitte 15', 15" von der theoretischen Biegelinie 16 zu, so daß beim Abbiegen des Randbereichs 11 bzw. 12 stets einer der Einschnitte 15', 15" in der Nähe der theoretischen Biegelinie 16 angeordnet ist und damit das Umbiegen des mit Erhebungen 7, 8 und Wölbungen gebildeten Himmels 1 ohne Überdehnung oder Beschädigung der Decklage 6 an den Sollknicklinien 13, 14 bzw. den Einschnitten 15, 15', 15" ermöglicht ist. Wenn auch die Grundstruktur 2 als im wesentlichen starr anzusehen ist, so kann sie doch eine gewisse Flexibilität besitzen, die eine Umbiegung ohne Überdehnung der Decklage 6 unterstützt.

In der vertikalen Draufsicht auf den Himmel sind die beiden sich aufspaltenden Sollknicklinien oder Einschnitte 15' und 15" in etwa symmetrisch zur theoretischen oder imaginären Biegelinie 16 angeordnet oder einer der Einschnitte 15' oder 15" liegt zur Biegelinie 16 näher wie der andere.

Das Umbiegen der Randabschnitte 11, 12 erfolgt gegen eine Rückstellkraft der beim Umbiegen elastisch verformten unteren Glasfaserschicht 5 oder, falls der Einschnitt 15 die Schaumstoffschicht 3 nicht gänzlich durchtrennt, der Glasfaserschicht 5 und einem Anteil der Schaumstoffschicht 3. Bei der Montage sind die Randabschnitte 11, 12 in der nach unten gebogenen Stellung gehalten. Nach dem Positionieren des Himmels 1 in seiner Einbaulage am Fahrzeugdach werden die Randabschnitte 11, 12 durch die Rückstellkraft in die knicklose Nennstellung zurückgebogen oder -geklappt. Die Decklage 6 spannt sich dabei an der Sollknicklinie und ist in der ursprünglichen Form angeordnet.

In einer Ausführungsform übergreift ein elastisches Spannelement 20, das auf der Oberseite der Grundstruktur 2 an der oberen Glasfasermatte 4 befestigt ist, den Einschnitt 15 oder die aufgeteilten Einschnitte 15' und 15" (siehe Fig. 4 und 6). Das Spannelement 20 bietet eine zusätzliche Rückstellkraft zum Zurückbiegen der Randabschnitte 11 und 12, falls die Rückstellkraft der Grundstruktur 2 bzw. der Glasfasermatte 5 nicht ausreicht. Das Spannelement 20 ist z. B. ein Gummiband.

Die Grundstruktur 2 kann am Zwischenstück 19 zwischen den beiden aufgeteilten Einschnitten 15' und 15" entfernt sein (siehe Fig. 5). Damit ist eine besonders flexible Verformbarkeit dieses Abschnitts gewährleistet. Statt der Grundstruktur 2 kann zwischen den beiden Einschnitten 15' und 15" ein von der Grundstruktur abweichendes elastisches Material 21 angeordnet sein, das komprimierbar ist und eine Rückstellkraft aufweist. Das elastische Material, z. B. ein Schaumstoff, kann bei der Herstellung der Grundstruktur 2 eingearbeitet werden. Dann sind die Einschnitte nicht tatsächliche Einschnitte, sondern lediglich Materialübergänge. Andererseits kann es nachträglich anstelle des zwischen den Einschnitten 15' und 15" herausgeschnittenen Zwischenstücks 19 eingesetzt werden.

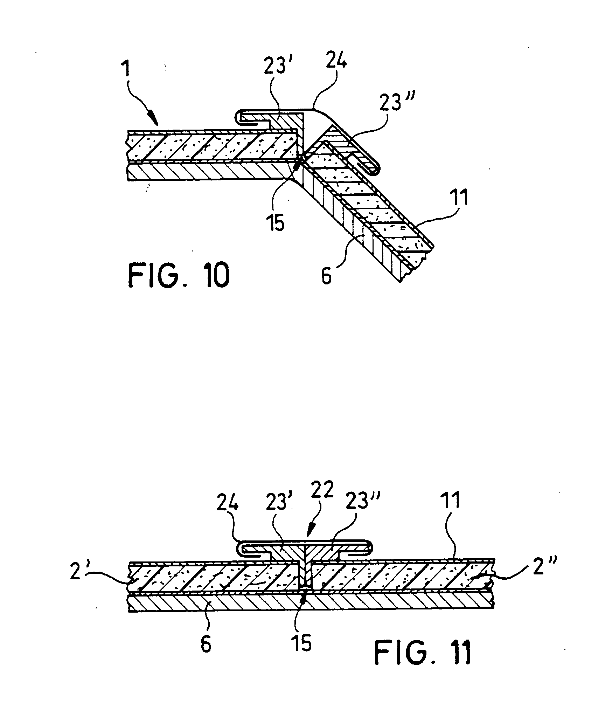

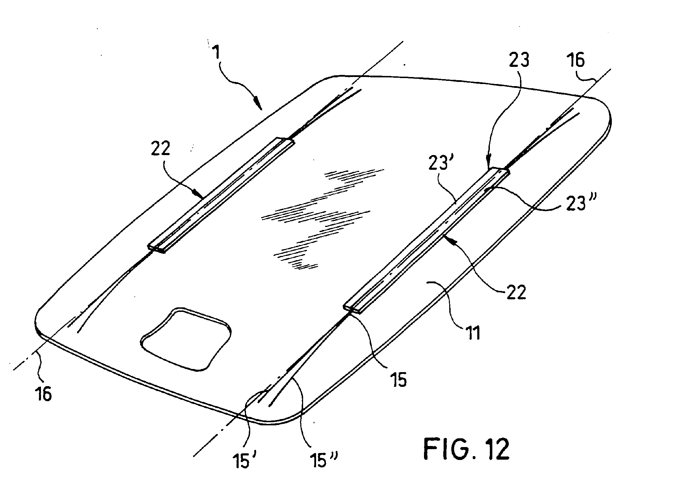

Fig. 10 bis 12 zeigen Ausführungsbeispiele des Himmels 1, bei denen eine Dehneinrichtung 22 in den aufgeklappten Einschnitt 15 bei herabgebogenem Randabschnitt 11 eingesetzt ist. Der Einschnitt 15 wird mit einer Spaltbreite von z. B. 1 mm in einem vergleichsweise ebenen Abschnitt des Himmels 1 hergestellt. Die Dehneinrichtung 22 ist ein zweiteiliger Profilstreifen 23, dessen Gesamtdicke im Bereich von z. B. 1,1 bis 1,5 mm liegt. Jeder Profilstreifen 23' und 23" ist mit der jeweiligen Schnittfläche der Grundstruktur 2 verklebt. Beim Zurückklappen des Randabschnitts 11 legen sich die beiden Profilstreifen 23' und 23" aneinander an und spreizen die beiden angrenzenden Grundstrukturteile 2' und 2" vom Einschnitt 15 her auseinander, so daß die untere flexible Decklage 6 gespannt und gedehnt wird. Dieses Dehnen an der Sollknickstelle verhindert, daß in der Einbaulage des Himmels 1 die Sollknickstelle als optische Unregelmäßigkeit der Decklage 6 sichtbar ist.

Des weiteren kann vorgesehen sein, daß eine Spanneinrichtung 24 in Form eines Gummibandes oder dergleichen über die beiden Oberseiten der Profilstreifen 23' und 23" gespannt und daran befestigt ist. Die Spanneinrichtung unterstützt in der schon beschriebenen Weise das Zurückklappen des heruntergebogenen Randabschnitts 11.

Die Dehneinrichtung 22 kann auch eine Federeinrichtung aus Metall oder Kunststoff oder ein elastisch komprimierbarer und sich anschließend wieder expandierender Schaumstoff sein.

In Abhängigkeit der Dachgestaltung und der Einbauerfordernisse kann der zumindest eine erhabene Bereich 7, 8 auch in Längsrichtung verlaufend ausgebildet sein und die jeweilige Sollknicklinie kann zum Abklappen des vorderen bzw. des hinteren Randbereichs in Querrichtung verlaufen.

### Bezugszeichenliste

- 1: Himmel
- 2: Grundstruktur
- 3: Schaumstoffschicht
- 4: Glasfaserschicht
- 5: Glasfaserschicht
- 6: Decklage
- 7: erhabener Bereich
- 8: erhabener Bereich
- 9: Vorderende
- 10: Hinterende
- 11: Randbereich
- 12: Randbereich
- 13: Sollknicklinie
- 14: Sollknicklinie
- 15: Einschnitt
- 16: Biegelinie
- 17: gewölbter Abschnitt
- 18: Zwischenbereich
- 19: Zwischenstück
- 20: Spannelement
- 21: elastisches Material
- 22: Dehneinrichtung
- 23: Profilstreifen
- 24: Spanneinrichtung

## Patentansprüche

1. Himmel für ein Fahrzeugdach mit einer im wesentlichen starren Grundstruktur (2), einer zum Fahrzeuginnenraum weisenden zumindest teilflexiblen Decklage (6) und wenigstens einer Sollknicklinie (13, 14), an der ein Himmelabschnitt zur Montage am Fahrzeugdach nach unten zur Decklage (6) hin umbiegbar oder abknickbar ist, **dadurch gekennzeichnet, daß** die Grundstruktur (2) im Bereich der Sollknicklinie (13, 14) eine Dehneinrichtung (22, 23) enthält, die die Decklage (6) in der zurückgeklappten Einbaulage des Himmels (1) gespannt oder gedehnt hält.

2. Himmel nach Anspruch 1, **dadurch gekennzeichnet, daß** die Dehneinrichtung (22, 23) in einem oberseitigen Einschnitt (15) in der Grundstruktur (2) eingesetzt ist.

3. Himmel nach Anspruch 1, **dadurch gekennzeichnet, daß** die Dehneinrichtung (22, 23) im Bereich der Sollknicklinie (13, 14) in der Grundstruktur (2) eingearbeitet ist.

4. Himmel nach Anspruch 1 oder 2, **dadurch gekennzeichnet, daß** die Dehneinrichtung (22, 23) ein zweiteiliger Profilstreifen (23', 23") ist.

5. Himmel nach Anspruch 1 oder 2, **dadurch gekennzeichnet, daß** die Dehneinrichtung (22, 23) ein elastischer Schaumstoff ist.

6. Himmel nach Anspruch 4, **dadurch gekennzeichnet, daß** eine Spanneinrichtung (24) über die beiden Oberseiten der Profilstreifen (23', 23") gespannt und daran befestigt ist.

7. Himmel nach Anspruch 6, **dadurch gekennzeichnet, daß** die Spanneinrichtung (24) aus einem Gummiband gebildet ist.

8. Himmel nach einem der vorhergehenden Ansprüche, **dadurch gekennzeichnet, daß**
die Sollknicklinie (13, 14) von einem Einschnitt (15) oberseitig in der Grundstruktur (2) gebildet ist und
ein auf der Oberseite der Grundstruktur (2) befestigtes elastisches Spannelement (20) den Einschnitt (15) übergreift.

9. Himmel nach Anspruch 8, **dadurch gekennzeichnet, daß** das Spannelement (20) aus einem Gummiband gebildet ist.
